# EUROPEAN PATENT SPECIFICATION

(11) **EP 2 342 497 B1**
(45) Date of publication and mention of the grant of the patent: **30.08.2017**
(21) Application number: 09744486.3
(22) Date of filing: 09.09.2009
(51) Int. Cl.: F23G 5/02, C10J 3/06, C10B 53/02, C10B 49/02

(54) **SYSTEM FOR THE GASIFICATION OF WASTE ORGANIC MATERIAL**
SYSTEM ZUR VERGASUNG VON ORGANISCHEM ABFALLMATERIAL
SYSTÈME POUR LA GAZÉIFICATION DE DÉCHETS ORGANIQUES

(30) Priority: 10.09.2008 IT BS20080169
(43) Date of publication of application: 13.07.2011
(73) Proprietor: Clerici, Doriano, 26100 Cremona (IT)
(72) Inventor: Clerici, Doriano, 26100 Cremona (IT)
(74) Representative: Sangiacomo, Fulvia
(86) International application number: PCT/IT2009/000405
(87) International publication number: WO 2010/029591

(56) References cited:
- WO-A-2007/024687
- DE-A1- 2 432 504
- US-A- 3 884 161
- US-B1- 6 439 135

## Description

### Field of application of the invention

This invention concerns the treatment and disposal of waste organic material such as, but not exclusively, solid urban waste, and refers in particular to a gasification plant of such materials with the production of a fuel deriving from the waste, that is to say synthesis gas-SynGas-which is then usable in systems for the production of electric and/or thermal energy.

### State of the technique

As is known gasification is a process without combustion that enables a fuel to be obtained from the thermal treatment of urban and non urban organic waste.

The document US-6 938 562 is indicative of such a gasification process, carried out however in a discontinuous way, in the sense that each reaction cell, or reactor, must be cooled and open after the treatment of each load in order to remove the residue and to load the new material to be processed. This also involves and requires the need each time to heat the material and once again to restore the gasification conditions with a loss in time and evident waste of energy.

In the present practice, the gasification that takes advantage of a molecular disassociation process, called pyrolysis, represents a valid alternative to all the incineration combustion plant, that above all cause problems of oxidation and production of dioxins and other pollutants.

The materials that can be treated in a pyrolysis process are typically
- the dry fractions of the urban waste, separated by mechanical systems and collected in an undifferentiated way and/or bio dried waste;
- the scrap coming from the selection of waste from differentiated collecting, that is the part not intended for salvage;
and furthermore, up to 50% in weight, of declared assimilated waste such as:
non chloride plastics;
polycouplings (cartons for milk, wine, fruit juices...);
the non chloride synthetic rubbers;
resins and synthetic and artificial fibres with a content of Cl< at 0, 5% in mass;
worn out tyres.

The CDR obtained, however, must correspond to precise requirements and parameters regulated by rules, such as those in the following table:

| **Pci** | CDR | 15.000 | KJ/Kg | min |
|---|---|---|---|---|
| **Humidity** | in mass | 25 | % | max |
| **Chlorine** | in mass | 0,9 | % | min |
| **Sulphur** | in mass | 0,6 | % | min |
| **Ashes** | on dry in mass | 20 | % | min |
| **Pb** | (volatile) on dry in mass | 200 | mg/kg | max |
| **Cr** | on dry in mass | 100 | mg/kg | max |
| **Cu** | (solub. comp.) on dry in mass | 300 | mg/kg | max |
| **Mn** | on dry in mass | 400 | mg/kg | max |
| **Ni** | on dry in mass | 40 | mg/kg | max |
| **Cd + Hg** | on dry in mass | 7 | mg/kg | max |

The gasification process is carried out in plants starting from various materials obtaining combustion gasses from it according to a general scheme

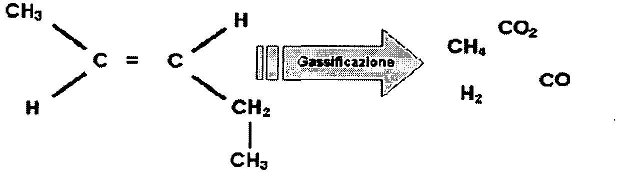

The organic material, regardless of its vegetable, animal or synthetic origin, contains solar energy that the photosynthesis process has imprisoned between the carbon and hydrogen molecules. Consequently, in a closed ambient with temperatures below 500°C and in the almost total absence of oxygen these waste products, that contain carbon, become completely modified by splitting the molecules, generally long carbonaceous chains, into more simple carbon monoxide, hydrogen and methane molecules that form a "synthesis gas" -SynGas- which is sufficiently pure to be used as it is.

The gas that develops in a length of time from between 8 and 24 hours, so as to come close to the natural degradation time of the molecules, represented by 15% to 30% in weight of the original organic material, depending on the process temperature which is normally made up of:
hydrogen (H₂), carbon monoxide (CO) and carbon dioxide (CO₂);
methane (CH₄) and light hydrocarbons;
traces of hydrocarbons with more molecular weight;
various contaminants among which stands out TAR, that is bituminous oil produced following the reactions of pyrolysis and present in a vapour state inside the gas.

The inferior calorific capacity developed by the gas in the combustion in a boiler, for the production of superheated steam to be used in a turbine of a generator, is usually between 3,000 kcal/m³ and 4,500 kcal/m³.

All with an average efficiency of 70% compared to the energy introduced, variously distributed in electricity and heat, and with a quantity of ashes remaining at the end of the process equal to about 3% of the starting mass.

Due to the effect of the kinetics of the gasification reaction and other particular conditions such as the relatively low treatment temperature, it reduces:
to over a hundred times the emission of fine dust, in particular the production of nano-powders;
to at least half of the production of hydrochloric acid, sulphur dioxide and carbon monoxide;
to a third of the nitrogen oxides;
from 20 to 50 times the heavy metals;
the concentration of dioxins and furans to a level so low that it cannot be measured.

Document WO 2007/024687 discloses a pyrolytic resource recovery system for transforming a solid or liquid carbon base feedstock, to hydrocarbon vapor and carbon char for converting the vapor to heat energy or liquid and producing the char for beneficial use, which comprises an oven for heating the feedstock in an oxygen rare environment, comprising an outer refractory lined containment vessel with fired burners and an inner containment vessel suspended within the outer vessel for receiving heat from the outer vessel, in which the inner vessel is suspended in a manner to provide a space surrounding the inner vessel, in which the space formed between the outside walls of the inner vessel and the inside walls of the outer vessel, piercing both the outer and inner vessels walls an inlet conduit through which the feedstock is continuously fed, sans air, a vapor outlet conduit, a char outlet conduit, and at least one additional conduit piercing only the inner vessel wall connecting the surrounding space to the inside of the inner vessel with the additional conduit extending into the interior of the inner vessel, ending in proximity of the feedstock inlet conduit in a manner to enable the product of combustion, aka flue gas, emanating from the fired burners and accumulating in the surrounding space, to circulate into the inside of the inner vessel and thereby physically contact the feedstock and intensify the heat exchange, which also comprises an external means connected to the vapor outlet conduit for creating negative pressure inside the oven whereby the greater atmospheric pressure outside of the oven will push combustion air into the fired burners.

Document US 6 439 135 discloses a municipal waste gasification system comprises a plurality of primary gasification chambers for receiving municipal waste, a means for operating the municipal waste gasification system so that one or more of the primary gasification chambers may be idle while the other primary gasification chambers are operating to produce an effluent by an oxygen-starved process, a means for heating the municipal waste under oxygen-starved conditions in the primary gasification chambers in order to gasify the municipal waste and produce the effluent, and at least one mixing chamber positioned to receive the effluent produced by the primary gasification chambers with an effluent pathway extending through each mixing chamber. The system also includes a means for supplying an oxygen-containing gas to the effluent in the mixing chamber in order to produce a mixed effluent, a secondary combustion chamber positioned to receive the mixed effluent produced by the mixing chamber, and a means for incinerating the mixed effluent in the secondary combustion chamber

Document US 3 884 161 discloses a waste disposal and energy recovery reactor apparatus and method for pollution free disposal of all types of organic waste materials with the continuous recovery of the reusable resources in the waste material. The apparatus consists of a main reactor chamber in elongated horizontal form having a plurality of top covers which may be opened for receiving solid waste and a multiplicity of air injection nozzles at the bottom for injecting high velocity air along with spaced nozzles for feeding waste liquid fuels for aiding and supporting combustion of the waste.

Document US 6 938 562 discloses a system for the gasification of waste organic material according to the preamble of claim 1.

### Object of the Invention

The object of the invention is however to propose an innovative plant to optimise the conditions and improve the efficiency, modular structure and safety of a gasification process of waste organic materials to be carried out advantageously in a continuous system which enables parity of performance with a discontinuous gasification system, to reduce both the down time and dimensions of the treatment cells and to ensure operating continuity of the equipment downstream.

The result, as sought-after, is a production of SynGas usable then as an energetic vector for the operating of a generator group and/or the production of thermal energy, principally with a completely negligible if not inexistent environmental and pollution impact.

Such an object is achieved in compliance with the invention using a system according to the preamble in claim 1 and where principally each primary reaction cell has a steel body with a special internal refractory covering, closed by depression, and associated with means for supplying it continuously with material to be processed and provided with means for evacuation, also continuous, of residual non-gasifiable material.

In fact, the gasification process involves all the organic parts present in each reaction cell, inside which there can be found non organic and inert materials such as glass, metals, etc. In this case, on conclusion of the primary process, these materials are extracted and transported to be selected. After the primary process, followed by the use of SynGas, a maximum residue estimable in 2 - 3% of ashes and aggregates can be found.

As regards to emissions in the atmosphere, as already pointed out, the destruction of an organic compound is the function of the temperature to cause the chemical bonds to break. In the proposed system, in one chamber or secondary cell like an after-burner, constant temperatures are reached which are by far higher than those necessary for breaking the more stable bonds. In this way, thanks to the non combustion in the primary cell and to the use of steam turbines, there are no emissions of fumes from the process, but only steam and the mere emissions of hot air and CO₂.

The energy recovery happens through the production of superheated steam and at high pressure for the feeding of turbines of a generator, both with the direct use of the heat not used in this way, for example for district heating, and for the delivery of electric energy.

The combination of these ways of recuperating thermal energy from waste makes this discharge process economically more favourable compared to all past and present solutions.

The energy recuperation system also plays an important role in the depuration of fumes. In fact, a rapid cooling of the fumes reduces the possibility of secondary reaction of the formation of pollutants, for example the formation ex novo of dioxins, furthermore the lowering of temperature causes a contraction of the levels of the fumes in the following depuration plants.

### Brief Description of the Drawings

The invention will however be from here on described in greater detail making reference to the enclosed indicative and not restrictive drawings, in which:

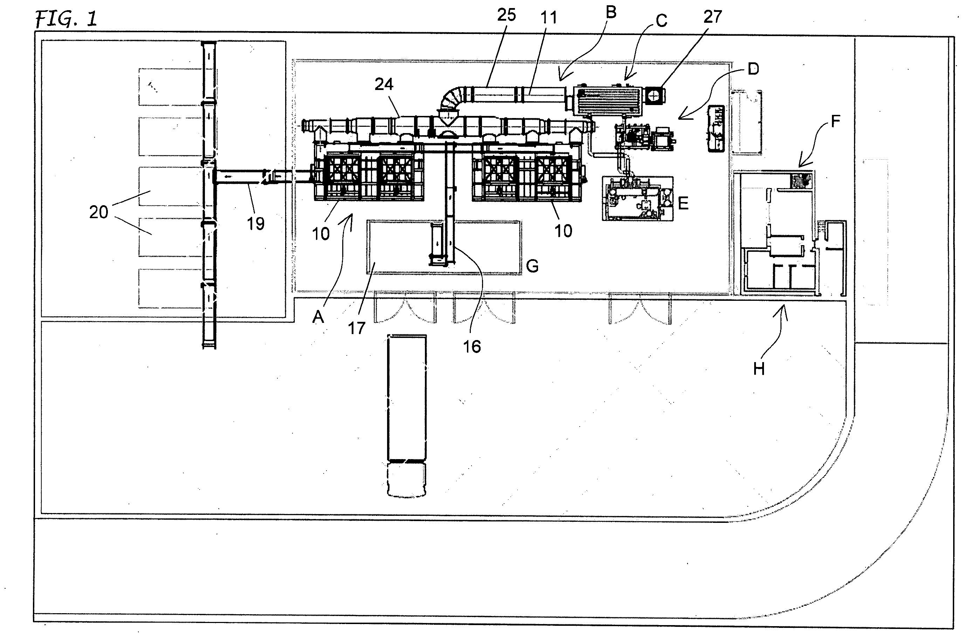

Fig. 1 shows a general lay-out of a treatment location for the gasification of waste;

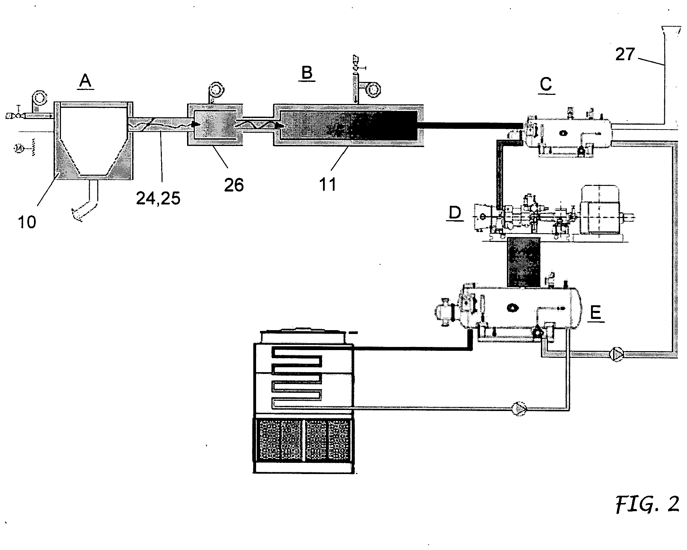

Fig. 2 shows a general lay-out of the plant according to the invention;
Figs. 3, 3a and 3b show, respectively, an end view, a view from above and an internal view of a primary reaction cell;

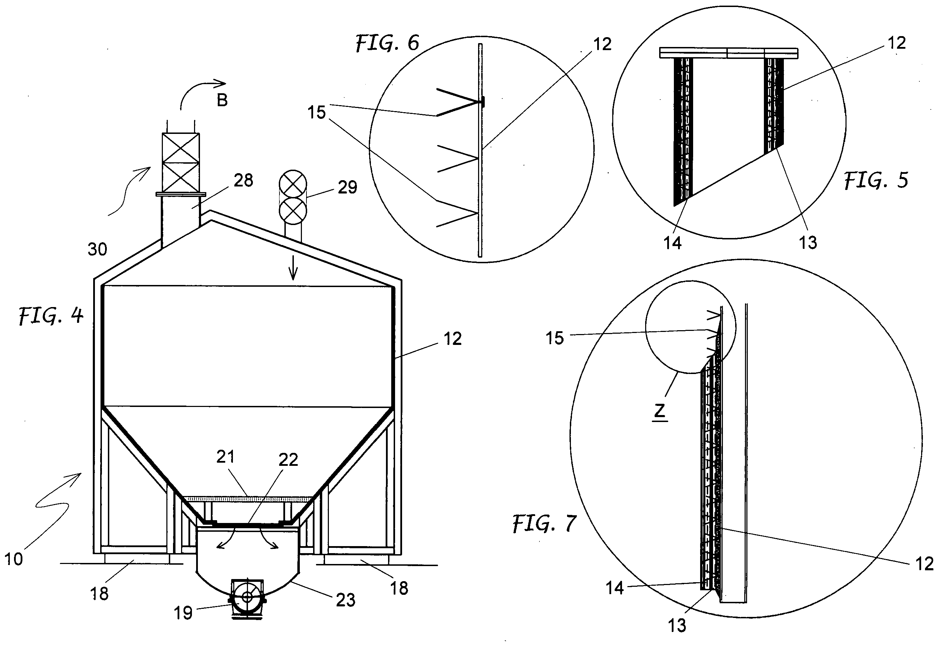

Fig. 4 shows a cross-section of a primary cell;
Fig. 5 shows a cross-section view of the detail X circled in Fig. 3;
Fig. 6 shows a cross-section view of the detail Y circled in Fig. 3;
Fig.7 shows a cross-section view of the detail Z circled in Fig. 6.

### Detailed Description of the Invention

The one represented is however a preferred solution of a plant for the gasification of organic waste for the production of SynGas and for a successive use of the latter.

The plant is made up mainly of:
a primary group (A) of gasification cells 10;
a secondary molecular dissociation group (B) of the SynGas in a post-combustion chamber 11;
a thermal energy production system (C), in particular steam, coming from the thermal exchange with gas exiting from the post combustion chamber 11;
an electric current generator unit (D);
a suppression and refrigeration device of the discharges in the atmosphere (E);
an electronic control system (F);
a weighing machine for weighing the conferred waste (G);
an administration and technical control office (H).

The dimensioning and capacity of the plant will depend on the daily quality and quantity of the material to be processed and, obviously, on the available space.

In particular, every primary gasification cell 10 consists in an external steel container 12 and an internal refractory structure to guarantee the thermal stability at the process temperatures (350°-500°C).

As regards to an internal refractory structure, the most appropriate was found to be one with a ceramic fibre panel 13 adhering to the internal surface of the steel container and one with a dense refractory concrete coat 14 superimposed on said panel. This coat of concrete is basically made of alumina and kaolin, even though from time to time in different ratios, and is spread directly inside the cell 10 and kept in place by gripper elements 15 projecting from the wall of the container and through the ceramic fibre panel 13.

As regards to the temperature process, it is reached and maintained by heating, for example by methane gas, the internal ambient of each primary cell, avoiding, thanks to a lack of oxygen, every combustion flame reaction that directly invests the treated waste and, consequently, every oxidation reaction.

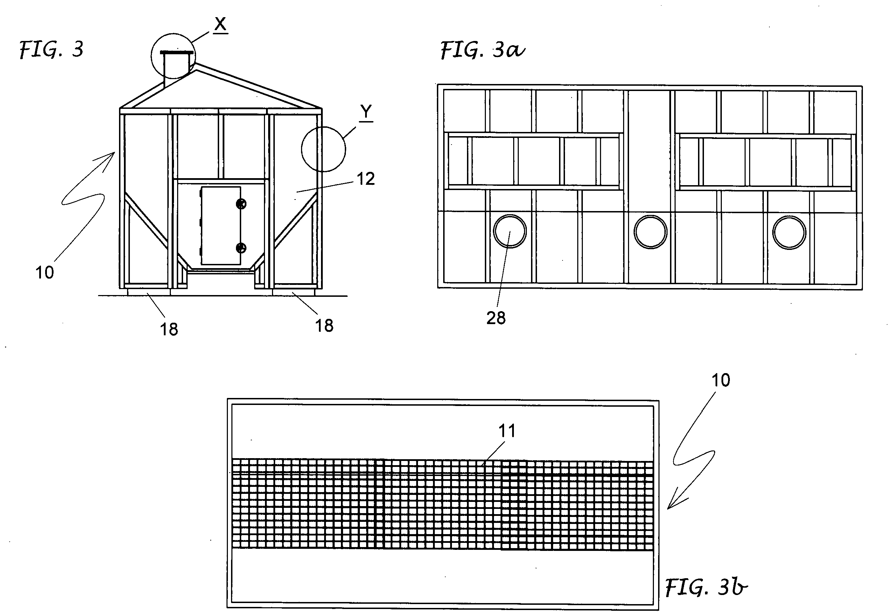

For this reason, all the primary cells are permanently closed and are placed in depression regime (-0, 5 bar), which also ensures that possible thermal and untreated gas loss are avoided. The external temperature of the cells during the process reaches about 30-35°C, thanks to the excellent thermal isolation. The primary cells 10 can be of various sizes both in height and in width and depth - Figs 3, 3a and 3b, respecting however an intransgressible ratio and which is determinant for the thermal performance of the process. The optimal ratio between the length and width of each primary cell will be between 1.50 and 3.20, usually between 1.70 and 1.80, depending on the material to be processed, and the bed, that is the volume, of material inside the cell that can be adjusted conveniently through the loading of material.

Once the material in each primary cell has reached the optimal quantity to start the process, a computerized control system will make the temperature increase to the required degree, as stated previously, with a slight depression (-0,5 Bar) and with oxygen present that will be reduced to a lower percentage or to a limit equal to 6%.

For the running of the process, inside each single primary cell are provided some control sensors in order to detect the exact temperature, pressure and percentage of oxygen; the information collected will be sent, in real time, to a central elaborator and should there be faults or malfunctions, a safety mechanism will immediately intervene by modifying the clashing parameters or if at a limit, by stopping the whole system.

The material to be processed is fed to the primary cells 10 continuously, even if in variable quantities depending on the treatment speed that is the gasification of the material in said cells. For this purpose the plant comprises a transportation group 16 that extends from a stocking pit 17 of the material up to the primary cells and is set up to download the material into each individual cell using a summit stellar valve system 29 conceived both for avoiding both thermal and gas loss from the cells and the entrance of air, thus of oxygen, in the same, so as not to modify the conditions of the reaction in action. To control the loading of the material into the primary cells, each one is mounted on loading cells 18, which enables the material to be measured which is progressively gasified and to adjust the loading of the new material to be processed in an equivalent quantity as the gasified one, maintaining in this way the volume of the material in each cell constant and the continuous function of the plant.

Each primary cell 10 is also provided with means for an evacuation from its bottom of the dry and clean ashes and non gasified residue and which are possibly recyclable in various ways. Evacuation is carried out by means of a pliable conveyor 19, for example made of iron, which moves to the storage containers 20 and is carried out by an automated process. In particular at the bottom of each cell is provided a grating 21, and below this a double closing system at two different levels 22 and 23. Each closing system is made up of doors 22 that open when the others doors 23 are closed. In this way the ashes and the non gasified waste are downloaded first through the opening of a door, the one at the top level, whereas the other remains closed, and then through the opening of the other door, the one on the bottom level, towards the conveyor 19 after the first closes, so as not to modify the depression state inside the cell caused by loss of heat and the entrance of air from outside. In other words, each primary cell operates in a slight depression and this remains unchanged both on the continuous load side of the material to be processed, and on the download side of the ashes and waste from the bottom.

If necessary, at the end of the gasification process on the bottom of each primary cell, that is on its grating 21, only the inert will remain which can be collected either manually or automatically, representing a high recyclable value.

With the gasification in the primary cells, all the organic material inserted is transformed in gas that springs from the summit 28 of the cells and is canalised, through safety valves 30 towards the secondary group B that is to say to the pos-combustion cell or chamber 11. The gas gushes out due to the fact that it has been treated at a temperature, that of pyrolysis, not sufficiently high enough to purify it and it may still contain noxious substances, but on passing from the primary cells 10 to the secondary cell or chamber 11 it is not by any means dispersed into the surrounding atmosphere as it is immediately collected in a manifold 24 and then transmitted in a conduit 25 through a safety valve -non shown.

In this phase the gas is made to pass into a chamber to mix with air 26 where it becomes enriched with oxygen (O2 ≥ 22%) and the pressure from negative becomes slightly positive. On entering the secondary cell 11, the gas is burnt by means of small burners at a temperature of between 900° and 1800°C, at an average of about 1500°C. In this way the exposure time and the high temperatures enable the gasses to be purified if certain minimum threshold levels are respected: 1000°C for 1 sec. (EEC Directive 2000/76); over 1000°C the shortening of the exposition time follows a logarithmic trend and so for 1500°C a fraction of a second would be more than enough. However, to reach the maximum efficiency and optimum results for environmental reasons, the system proposed is adjusted for an exposition of the gas for 3 secs. at a temperature of 1500°C.

The secondary cell 11 is constructed like a steel container and with ceramic refractory and filter systems for the high temperatures. As already applies for each primary cell 10, and here for all the more reason, also the secondary cell or chamber 11 has on its inside a high number of sensors which have the task of monitoring and calibrating each process phase also in relation to the effluent fumes content from a fumes purification plant and from a terminal chimney stack 27. In other words the composition of the emissions is checked continuously and, in feedback, the temperature in the secondary cell is adjusted by conveniently varying the fuel/combustion supporter ratio in order to obtain the "cracking" of the non gasified noxious substances so as to avoid discharging the latter into the atmosphere.

After flowing through the passage in the secondary chamber 11, the gas obtained is basically without pollutants or noxious substances of importance, exiting as fumes at a temperature close to 1000°C. For technical reasons connected with the successive use of the feeding of a turbine, a drop in this temperature level is carried out by means of appropriate cooling towers and a water circulating heat exchanger group preferably in the immediate vicinity of the output of the secondary cell in order to avoid additional canalization for the fumes at over 1000°C. Water vapour is obtained in this way and a minimum part of which is dispersed into the atmosphere, in reality in the form of a flow of humid air at about 35°C and 0,5 Bar of pressure.

Once the vapour has reached the required working temperature, it is piped to a turbine for the successive production of electric energy by means of an alternator.

Both the turbine and the alternator can be conventional.

The cooling system provided to lower the high temperatures of the fumes exiting from the cell or secondary chamber can also be used to cool various parts of the system. Rapid cooling of the fumes reduces the possibility of secondary reactions and the formation of pollutants, for example dioxin. Furthermore the lowering of the temperature of the fumes upstream of the damping systems establishes various advantages among which are:
a contraction in the flow of the fumes in purification plants;
the size of the conveyors;
a considerable reduction in the quantity of evaporated water from the damping systems in the case of humid treatment of fumes;
a reduction in the percentage of vapour in the fumes discharged and consequent lowering of the dew-point of the same.

The cooling takes place in a closed circuit with water with certain chemical-physical characteristics which are constantly controlled to avoid scale on the surfaces of the heat exchanger. The system will be basically made up of a well, circulation pumps and exchangers or cooling towers.

The control system foresees, through a network of sensors such as thermometers, pressure switches, oxymeters and cabled chromatographs in various units, that the data is grouped in one single control panel and control of the system on three safety levels:
FIRST, human control: a team of technicians monitor, from an internal control room, the whole gasification cycle, 24 hours a day, guaranteeing that the system is continuously monitored, controlled, managed and able to function autonomously.

SECOND, computerized control on site: manages, controls and adjusts all the functions and activities of the plant by intervening and registering all the operations and functional parameters of the same.

THIRD, IT or remote control: it is the faculty of the end user to install a remote control or a data transmission system via Internet to supply the authorities in charge with all the data collected regarding environmental impact.

The authorities in charge of running the gasification plant might take the advantage of having a dedicated line for the control of the parameters of interest, and all the operations and the parameters can be registered and made available to all the interested parties with reference, in particular, to the impact on the environment.

The results of the tests carried out have shown that also with a series of waste materials that represent the materials with the highest resistance to the breakage of the molecular chains, the results were exceptional. The analyses highlighted the levels of the risk agents for the health, not cancerogenic and cancerogenic respectively less than 5.0 per cent and 0.1 per cento as regards to the limits prescribed in USA by EPA (Environmental Protection Agency) and imposed in the UE by the aforementioned Community Directives 76/2000. The concentrations of the contaminants, in fact, resulted to be well below the limits taken as a reference such as qualitative parameters, confirming the performance of the plant and the efficiency of the monitoring within the sphere of the management system of the environmental location.

To be emphasized, for the importance it undertakes compared to the actual thermal treatment systems of the waste to be disposed of or for energy recovery, the complete elimination or to a completely negligible level of permanent volatile compounds, of the furans and of the other chloride compounds such as the dioxins; in fact the high temperatures reached during the gasification process and above all in the secondary cell, enable the age-old problem of the formation of the abovementioned dangerous elements for the environment and for man to be avoided. The technology is calibrated so as to virtually eliminate the production of dioxins and furans. Dioxins and furans form when the chloride unites with complex organic compounds (VOCs - Volatile organic compounds). While the gas passes into the secondary cell, the temperature is increased to over 1200° - 1600° C, destroying said compounds.

While the chloride is still present, the formation of dioxins and furans is avoided thanks to the 100% destruction of the VOCs. The chloride, however, is able to unite with the hydrogen to generate HCl. In the case of organic waste with a high quantity of plastic material, the presence of HCl in the gas could cause problems. In this case however, a semi-dry or dry washing system can be installed to the HCl. These washing systems, made typically with hydrated lime, require a lower temperature compared to the ones present in the cell or secondary chamber, so the process can be provided with an additional heat exchanger. The progress of the process which is basically in a closed circuit with the absence of dispersions from the plant also eliminates every possibility of polluting the water and the soil. Also the ashes become inert and are not dangerous.

## Claims

1. A system for the gasification of waste organic material by means of pyrolysis, comprising a plurality of primary reaction cells (10) designed to receive a starting material, means for loading (18) the starting material into each primary cell (10), means for removal (19) of the non gasified ashes and residue from each primary cell, means for heating each primary cell at a gasification temperature of the starting material loaded for the production of gas, means for collecting (24) and channelizing (25) of the gas from said primary cells to a post combustion cell or chamber (11) for the combustion of the gas at high temperatures and cleaning of pollutants and harmful substances, and following means for use as an energetic vector of the effluent fumes from said post-combustion chamber, whereby each primary reaction cell is closed and operating in a vacuum **characterized in that** each primary reaction cell (10) has a steel body (12) with a special internal refractory coating (13) and it is associated with means (16) to be continuously fed with the material to be processed and provided with means for discharging (19), also continuously, residual non gasified materials.

2. The system for the gasification of organic waste materials according to claim 1, wherein the primary reaction cells are sized depending on the quality and quantity of the material to be processed daily and are, kept in a constant vacuum condition of about -0.5 bar and substantially with a lack of oxygen.

3. The system for the gasification of organic waste materials according to claims 1 or 2, wherein each primary reaction cell (10) has a greater length than the width with a ratio between the length and width of between 1.50 and 3.20, preferably between 1.70 and 1.80, depending on the material to be processed, and wherein the bed, that is to say the volume, of material inside the cell may be adjusted through the loading of the material.

4. A system for the gasification of organic waste materials according to claim 3, wherein each primary reaction cell comprises an external steel container (12) and an internal refractory covering structure (13) which is at least double layer to guarantee the thermal stability at the process temperatures, said refractory covering structure being made up of a ceramic fibre panel adherent to the internal surface of the steel container and of a dense refractory concrete covering overlapping said panel and in contact with the material to be processed.

5. A system for the gasification of organic waste materials according to claim 4 wherein the refractory concrete covering (13) with an alumina and kaolin base with a variable ratio depending on the material to be processed, and it is laid directly inside the rationing cell and held in place by gripper elements protruding from the wall of the container and passing through the ceramic fibre panel, and wherein the material to be processed is heated by a heating of the internal area of each cell.

6. A system for the gasification of organic waste materials according to any of the previous claims, wherein for a continuous feed of material to be processed a conveyor group (16) is associated to the primary reaction cells, which extends from a storage area (17) of the original material and which is set up to download the material into each individual cell by means of a summit star valves (25) that avoid the loss of gas and heat from the cells and an input of air from outside to maintain the primary cells in a vacuum.

7. A system for the gasification of organic waste materials according to any of the previous claims, wherein for the evacuation of the ashes and non gasified residue a conveyor (19) is associated to the primary reaction cells, moving towards collecting containers (20) and set up to receive the ashes from the bottom of the primary cells using suitable means which prevent air from entering from outside and maintain the primary cells in a vacuum.

8. A system for the gasification of organic waste materials according to any of the previous claims, wherein each primary reaction cell is mounted on loading cells (18) managed to adjust the loading of new material to be processed in quantities equivalent to the gasified amount and to maintain the volume of material in each cell constant and the operation of the system continuous.

9. A system for the gasification of organic waste materials according to any of the previous claims, furthermore comprising means for automatically running the feed of material to the primary reaction cells in proportion to the progressively gasified processed material, the exit of the gas generated by the primary cells towards the post-combustion chamber and the download of the ashes and non gasified residue from the bottom of said cells.

10. A system for the gasification of organic waste materials according to any of the previous claims, furthermore comprising analysing and control means (F) of the fumes exiting from the post-combustion chamber and to vary the heating conditions and reaction in said chamber depending on the pollution content in the fumes released.

## Patentansprüche

1. System zur Vergasung von organischem Abfallmaterial durch Pyrolyse, umfassend
eine Mehrzahl von Primärreaktionszellen (10), die dazu ausgelegt sind, ein Ausgangsmaterial zu empfangen,
Mittel zum Laden (18) des Ausgangsmaterials in jede Primärzelle (10),
Mittel zum Entfernen (19) der nicht vergasten Asche und des Rückstandes aus jeder Primärzelle,
Mittel zum Heizen jeder Primärzelle auf eine Vergasungstemperatur des für die Gasproduktion geladenen Ausgangsmaterials,
Mittel zum Sammeln (24) und Kanalisieren (25) des Gases aus der Primärzelle zu einer Nachverbrennungszelle oder -kammer (11) für die Verbrennung des Gases bei hohen Temperaturen und zur Reinigung von umweltschädlichen und gefährlichen Stoffen,
und darauffolgende Mittel, die als Energieüberträger der Abdämpfe aus der Nachverbrennungszelle verwendet werden, wobei jede Primärreaktionszelle geschlossen ist und unter Vakuum betrieben wird,
**dadurch gekennzeichnet, dass** jede Primärreaktionszelle (10) einen Stahlkörper (12) mit einer spezialen feuerfesten Innenbeschichtung (13) aufweist und mit Mitteln (16) verbunden ist, die mit dem zu verarbeitenden Material kontinuierlich gespeist werden sollen, und Mitteln zum ebenfalls kontinuierlichen Austragen (19) von nicht vergasten Reststoffen aufweist.

2. System zur Vergasung von organischem Abfallmaterial nach Anspruch 1, wobei die Primärreaktionszellen abhängig von der Qualität und Quantität des täglich zu verarbeitenden Materials dimensioniert sind und in einem konstanten Vakuumzustand von etwa -0,5 bar und im Wesentlichen unter Sauerstoffmangel gehalten werden.

3. System zur Vergasung von organischem Abfallmaterial nach Anspruch 1 oder 2, wobei jede Primärreaktionszelle (10) eine größere Länge als die Breite aufweist, mit einem Verhältnis zwischen Länge und Breite von 1.50 bis 3.20 und bevorzugt von 1.70 bis 1.80, abhängig von dem zu verarbeitenden Material, und wobei das Bett, d.h. das Volumen, des Materials innerhalb der Zelle durch Aufgabe des Materials eingestellt werden kann.

4. System zur Vergasung von organischem Abfallmaterial nach Anspruch 3, wobei jede Primärreaktionszelle einen externen Stahlbehälter (12) und eine feuerfesten internen Hüllstruktur (13) aufweist, die zumindest eine doppelte Schicht ist, um die thermische Stabilität bei Verfahrenstemperaturen zu gewährleisten, und die feuerfeste Hüllstruktur aus einem Keramikfaserpaneel, das an der Innenfläche des Stahlbehälters haftet, und aus einer dichten feuerfesten Betondeckung, die das Paneel überlappt und in Kontakt mit dem zu verarbeitenden Material ist, hergestellt wird.

5. System zur Vergasung von organischem Abfallmaterial nach Anspruch 4,wobei die feuerfeste Betondeckung (13) mit einer Basis aus Aluminiumoxid und Kaolin mit einem variablen Verhältnis abhängig von dem zu verarbeitenden Material versehen ist und direkt innerhalb der Rationierungszelle gelegt ist und durch Greifelemente an Ort und Stelle gehalten wird, die von der Wand des Behälters vorstehen und durch das Keramikfaserpaneel hindurchtreten, und wobei das zu verarbeitende Material durch eine Erwärmung des Innenraumes jeder Zelle erhitzt wird.

6. System zur Vergasung von organischem Abfallmaterial nach einem der vorhergehenden Ansprüche, wobei der Primärreaktionszelle eine zur kontinuierliche Zuführung von zu verarbeitenden Material vorgesehene Fördereinrichtungsgruppe (16) zugeordnet ist, welche sich von einem Lagerbereich (17) des ursprünglichen Materials erstreckt und dafür eingerichtet ist, das Material in jede einzelne Zelle mittels eines Scheitel-Sternventils (25) zu laden, welches Gasverluste, Wärme aus den Zellen und ein Eindringen von Luft von außen verhindert, um die Primärzellen unter Vakuum zu halten.

7. System zur Vergasung von organischem Abfallmaterial nach einem der vorhergehenden Ansprüche, wobei der Primärreaktionszelle eine zur Evakuierung der Asche und des nicht vergasten Rückstandes vorgesehene Fördereinrichtung (19) zugeordnet ist, welche sich in Richtung Sammelbehälter (20) bewegt und dafür eingerichtet ist, die Asche aus dem Boden der Primärzellen aufzunehmen, unter Verwendung von geeigneten Mitteln zur Verhinderung des Eindringens der Luft von außen und zum Halten der Primärzellen unter Vakuum.

8. System zur Vergasung von organischem Abfallmaterial nach einem der vorhergehenden Ansprüche, wobei jede Primärreaktionszelle auf Beschickungszellen (18) montiert ist, die zum Einstellen der Beschickung von neuem zu verarbeitenden Material in der gleichen Menge wie die vergaste Menge vorgesehen sind und zum Konstanthalten des Materialvolumens in jeder Zelle sowie zur Aufrechterhaltung des kontinuierlichen Betriebs des Systems eingerichtet sind.

9. System zur Vergasung von organischem Abfallmaterial nach einem der vorhergehenden Ansprüche, weiter umfassend Mittel zur automatischen Durchführung der Materialzuführung zu den Primärreaktionszellen proportional zum fortschreitend vergasten Material, des Austrages des von der Primärzelle erzeugten Gases zu der Nachverbrennungskammer und des Abladens der Asche und der nicht vergasten Rückständen aus dem Boden der Zelle.

10. System zur Vergasung von organischem Abfallmaterial nach einem der vorhergehenden Ansprüche, weiter umfassend Analyse- und Steuermittel (F) für die Abdämpfe aus der Nachverbrennungszelle, um die Erwärmungszustände und Reaktionen in dieser Kammer in Abhängigkeit vom Schadstoffgehalt in den freigesetzten Abdämfen zu ändern.

## Revendications

1. Système de gazéification de déchets organiques par pyrolyse, comprenant une pluralité de cellules de réaction primaires (10) conçues pour recevoir une matière de départ, des moyens pour charger (18) la matière de départ dans chaque cellule primaire (10), des moyens pour évacuer (19) les cendres et les résidus non gazéifiés de chaque cellule primaire, des moyens pour chauffer chaque cellule primaire à une température de gazéification de la matière de départ chargée pour la production de gaz, des moyens de collecte (24) et de canalisation (25) du gaz provenant desdites cellules primaires vers une cellule ou une chambre de postcombustion (11) pour la combustion du gaz à hautes températures et le nettoyage des polluants et des substances nocives, et des moyens successifs à utiliser comme vecteur énergétique des fumées effluent de ladite chambre de postcombustion, de sorte que chaque cellule de réaction primaire est fermée et fonctionnant sous vide, **caractérisé en ce que** chaque cellule de réaction primaire (10) a un corps en acier (12) avec un revêtement réfractaire interne spécial (13) et elle est associée à des moyens (16) pour l'alimenter en continu avec la matière à traiter et pourvue de moyens pour décharger (19), également en continu, des matières résiduelles non gazéifiées.

2. Système de gazéification de déchets organiques selon la revendication 1, dans lequel les cellules de réaction primaires sont dimensionnées en fonction de la qualité et de la quantité de la matière à traiter quotidiennement et sont maintenues dans un état sous vide constant d'environ -0,5 bars et substantiellement avec un manque d'oxygène.

3. Système de gazéification de déchets organiques selon la revendication 1 ou 2, dans lequel chaque cellule de réaction primaire (10) a une longueur supérieure à la largeur avec un rapport entre la longueur et la largeur comprise entre 1,50 et 3,20, de préférence entre 1,70 et 1,80, selon la matière à traiter, et dans lequel le lit, c'est-à-dire le volume, de matière à l'intérieur de la cellule peut être ajusté par le chargement de la matière.

4. Système de gazéification de déchets organiques selon la revendication 3, dans lequel chaque cellule de réaction primaire comprend un récipient externe en acier (12) et une structure interne de revêtement réfractaire (13) qui est au moins à double couche pour garantir la stabilité thermique aux températures du procédé, ladite structure de revêtement réfractaire étant constituée d'un panneau de fibres céramiques adhérant à la surface interne du récipient en acier et d'un revêtement en béton réfractaire dense superposé audit panneau et en contact avec la matière à traiter.

5. Système de gazéification de déchets organiques selon la revendication 4, dans lequel le revêtement de béton réfractaire (13) a une base d'alumine et de kaolin avec un rapport variable en fonction de la matière à traiter, et il est placé directement à l'intérieur de la cellule de rationnement et maintenu en place par des éléments de préhension faisant saillie de la paroi du récipient et traversant le panneau de fibres céramiques, et dans lequel la matière à traiter est chauffée par un chauffage de la zone interne de chaque cellule.

6. Système de gazéification de déchets organiques selon l'une quelconque des revendications précédentes, dans lequel, pour une alimentation continue de la matière à traiter, un groupe convoyeur (16) est associé aux cellules de réaction primaires, qui s'étend depuis une zone de stockage (17) de la matière d'origine et qui est configuré pour décharger la matière dans chaque cellule individuelle au moyen d'une vanne rotative de sommet (25) qui évite la perte de gaz et de chaleur des cellules et une entrée d'air de l'extérieur pour maintenir les cellules primaires sous vide.

7. Système de gazéification de déchets organiques selon l'une quelconque des revendications précédentes, dans lequel, pour l'évacuation des cendres et du résidu non gazéifié, un convoyeur (19) est associé aux cellules de réaction primaires, se déplaçant vers des récipients collecteurs (20) et équipé pour recevoir les cendres du fond des cellules primaires en utilisant des moyens appropriés qui empêchent l'entrée de l'air de l'extérieur et maintiennent les cellules primaires sous vide.

8. Système de gazéification de déchets organiques selon l'une quelconque des revendications précédentes, dans lequel chaque cellule de réaction primaire est montée sur des cellules de chargement (18) gérées pour ajuster le chargement de nouvelle matière à traiter en quantités équivalentes à la quantité gazéifiée et pour maintenir le volume de matière constante dans chaque cellule et le fonctionnement continu du système.

9. Système de gazéification de déchets organiques selon l'une quelconque des revendications précédentes, comprenant en outre moyens pour exécuter automatiquement l'alimentation de matière aux cellules de réaction primaires proportionnellement à la matière traitée progressivement gazéifiée, à la sortie du gaz généré par les cellules primaires vers la chambre de postcombustion et au déchargement des cendres et des résidus non gazéifiés du fond desdits cellules.

10. Système de gazéification de déchets organiques selon l'une quelconque des revendications précédentes, comprenant en outre moyens d'analyse et de contrôle (F) des fumées sortant de la chambre de postcombustion et pour changer les conditions de chauffage et la réaction dans ladite chambre en fonction du contenu de pollution dans les fumées libérées.
